# EUROPEAN PATENT APPLICATION

(11) **EP 4 497 484 A1**
(43) Date of publication of application: **29.01.2025**
(21) Application number: 23188208.5
(22) Date of filing: 27.07.2023
(51) Int. Cl.: A63F 13/73, A63F 13/75, G06T 1/00, A63F 13/35

(54) **WATERMARKING OF VIDEO GAME CONTENT**

(71) Applicant: Irdeto B.V., 2132 LS Hoofddorp (NL)
(72) Inventor: HUIN, Steeve, 2132 LS Hoofddorp (NL); HIETBRINK, Erik, 2132 LS Hoofddorp (NL)
(74) Representative: Boult Wade Tennant LLP

(57) **Abstract**

A method for a computer game, executing at a computer game system of an end-user, to embed information in video content, the video content comprising a sequence of video images generated for the computer game, the method comprising: for each of one or more video images of the sequence of video images, generating a watermarked image for display to the end-user, said generating comprising combining the video image and a watermark pattern representative of at least a part of the information using a shader of the computer game.

## Description

### Field of the invention

The present invention relates to methods for a computer game, executing at a computer game system of an end-user, to embed information in video content.

### Background of the invention

Digital watermarking of content is very well known - see, for example https://en.wikipedia.org/wiki/Digital_watermarking and "Digital watermarking", Cox et al., Journal of Electronic Imaging 11, no. 3 (2002), both of which are incorporated herein by reference. Herein, the term "content", or an "item of content", may refer to any type of information, and may, for example, include one or more of audio data, image data, video data, textual data, multimedia data, a web page, software products, security keys, experimental data or any other kind of data. There are many methods for performing digital watermarking of content but, in general, they all involve adding a watermark to an item of content. This involves embedding, or adding, a watermark payload (or watermark symbols, or a watermark codeword, or payload data) into the original item of content to form a watermarked item of content. The watermarked item of content can then be distributed to one or more users (or recipients or receivers).

The method used for adding a watermark to an item of content depends on the intended purpose of the watermark. Some watermarking techniques are designed to be "robust", in the sense that the embedded watermark payload can be successfully decoded even if the watermarked item of content has undergone subsequent processing (be that malicious or otherwise). Some watermarking techniques are designed to be "fragile", in the sense that the embedded watermark payload cannot be successfully (or completely) decoded if the watermarked item of content has undergone subsequent processing or modification. Some watermarking techniques are designed such that the difference between the original item of content and the watermarked item of content is substantially imperceptible to a human user (e.g. the original item of content and the watermarked item of content are visually and/or audibly indistinguishable to a human user). Other criteria for how a watermark is added to an item of content exist.

### Summary of the invention

According to a first aspect of the invention, there is provided a method for a computer game, executing at a computer game system of an end-user, to embed information in video content, the video content comprising a sequence of video images generated for the computer game, the method comprising: for each of one or more video images of the sequence of video images, generating a watermarked image for display to the end-user, said generating comprising combining the video image and a watermark pattern representative of at least a part of the information using a shader of the computer game.

In some embodiments, the method comprises the shader generating the watermark pattern. In some such embodiments, the method comprises the shader receiving a key from a game server involved in provision of at least a part of the computer game functionality, wherein the shader generates the watermark pattern using the key.

In some embodiments, the method comprises the computer game obtaining the watermark pattern from a game server involved in provision of at least a part of the computer game functionality.

In some embodiments, the information comprises one or more of: (a) an identifier of the particular instance of the computer game executing at the computer game system; (b) an identifier of the computer game system; and (c) an identifier of the end-user.

In some embodiments, the shader is preconfigured with at least a part of the information to be embedded in the video content.

In some embodiments, the method comprises the shader receiving at least a part of the information to be embedded in the video content from a game server involved in provision of at least a part of the computer game functionality.

In some embodiments, combining the video image and the watermark pattern comprises the shader applying the watermark pattern to the video image as an overlay for the video image and/or as a texture for the video image.

According to a second aspect of the invention, there is provided a computer program which, when executed by one or more processors of a computer game system, causes the one or more processors to carry out a method according to the above-mentioned first aspect or any embodiment thereof. The computer program may be stored on a computer-readable medium.

### Brief description of the drawings

Embodiments of the invention will now be described, by way of example only, with reference to the accompanying drawings, in which:
Figure 1 schematically illustrates an example of a computer system;
Figure 2 schematically illustrates a watermarking system according to some embodiments of the invention; and
Figures 3a, 3b and 3c schematically illustrate end-user computer game systems according to some embodiments of the invention.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

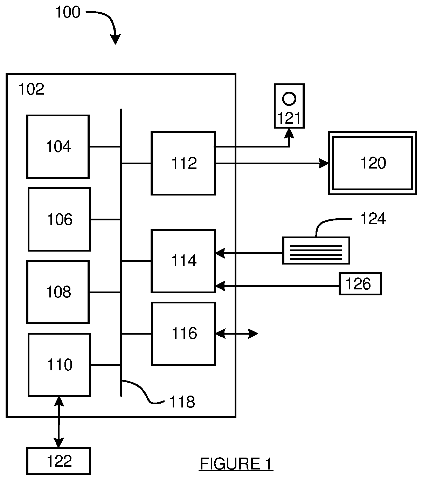

Figure 1 schematically illustrates an example of a computer system 100. The system 100 comprises a computer 102. The computer 102 comprises: a storage medium 104, a memory 106, a processor 108, a device interface 110, a user output interface 112, a user input interface 114 and a network interface 116. Each of these components may be arranged to communicate with one or more of the other components via one or more communication buses 118 of the computer 102.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The device interface 110 may be any unit for providing an interface to a device 122 external to, or removable from, the computer 102. The device 122 may be a data storage device, such as one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 connected to the user output interface 112.

Finally, the network interface 116 provides functionality for the computer 102 to download data from and/or upload data to one or more data communication networks. This may be via wired and/or wireless communication.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a geographical navigation device; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

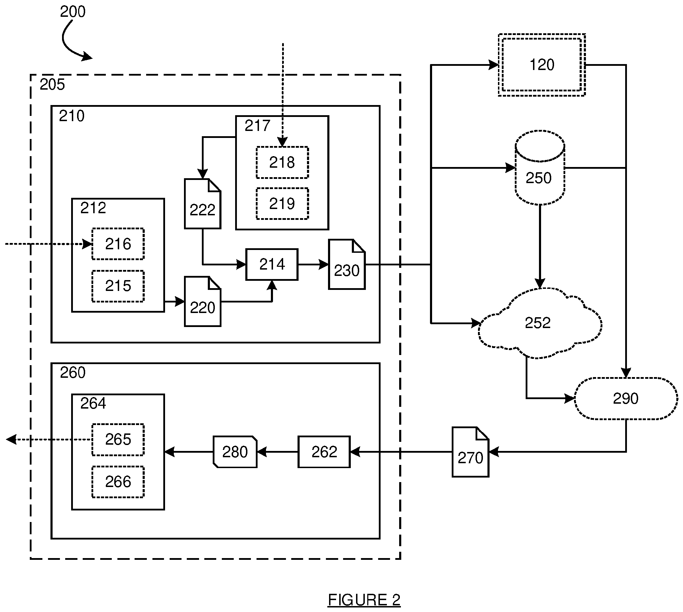

Figure 2 schematically illustrates a watermarking system 200 according to some embodiments of the invention. The watermarking system 200 comprises a watermark embedding system 210 (or a watermark embedder or encoder) and a watermark decoding system 260 (or a watermark detector). The watermark embedding system 210 and the watermark decoding system 260 may take the form of one or more computer systems 100 as shown in figure 1, although it will be appreciated that this is merely an example. Indeed, the watermark embedding system 210 and the watermark decoding system 260 may be implemented on the same computer system 100 and/or may be operated by the same entity and may, therefore, be viewed as a combined watermark embedding and decoding system, as illustrated by a dashed line 205 in figure 2. However, it will be appreciated that the watermark embedding system 210 and the watermark decoding system 260 may be implemented on different computer systems 100 and/or may be operated by different entities and may, therefore, be viewed as separate systems.

The watermark embedding system 210 comprises a content source module 212, an embedding module 214, and a watermark pattern module 217, each of which may be implemented as software executing on, say, a processor 108 of a computer system 100 that is part of (or that forms) the watermark embedding system 210 or as a hardware module of the watermark embedding system 210 or as a combination of both software and hardware. In operation, the content source module 212 is arranged to provide an initial item of content 220 to the embedding module 214. The embedding module 214 is arranged to combine a watermark pattern 222 provided by, and received from, the watermark pattern module 217 with the initial item of content 220 received from the content source module 212, to thereby form a watermarked item of content 230.

In embodiments of the invention, the initial item of content 220 is an image (which may be a single image, or which may be a frame or a field from a sequence of images, i.e. from a video sequence). Likewise, the watermark pattern 222 may be viewed as an image (or an indication of adjustments or modifications to be made to the initial item of content 220 in the spatial domain), which the embedding module 214 overlays onto the initial item of content 220 to thereby generate the watermarked item of content 230. The adjustments or modifications (as represented by the watermark pattern 222) to be made to the initial item of content 220 may involve increasing the value of one or more elements (e.g. pixels or colour components) of the initial item of content 220 and/or decreasing the value of one or more elements (e.g. pixels or colour components) of the initial item of content 220.

In some embodiments, the embedding module 214 overlays (or adds or combines) the watermark pattern 222 with the initial item of content 220 without any further changes to the modifications indicated/represented by the watermark pattern 222. In alternative embodiments, the embedding module 214 may make one or more adjustments to the modifications indicated/represented by the watermark pattern 222 before overlaying (or adding or combining) the watermark pattern 222 with the initial item of content 220 - such adjustments could be implemented so as to reduce any perceptual differences between the watermarked item of content 230 and the initial item of content 220 and/or to improve the robustness of the watermark (i.e. increase the likelihood of the watermark being subsequently decodable by the watermark decoding system 260). In alternative embodiments, the embedding module 214 may apply one or more thresholds/limits (which may be dynamically determined based on the initial item of content 220) to the modifications indicated/represented by the watermark pattern 222 when overlaying (or adding or combining) the watermark pattern 222 with the initial item of content 220 - such thresholds/limits could be implemented so as to reduce any perceptual differences between the watermarked item of content 230 and the initial item of content 220 and/or to improve the robustness of the watermark (i.e. increase the likelihood of the watermark being subsequently decodable by the watermark decoding system 260).

Thus, in summary, the watermark embedding system 210 forms a watermarked item of content 230 from an initial item of content 220, where the watermarked item of content 230 comprises (or has embedded therein) a watermark that represents (or embeds or encodes or corresponds to) certain payload data (as represented by the watermark pattern 222).

In some embodiments, the content source module 212 may itself generate some or all of the initial item of content 220 and may, therefore, comprise a content generator 215. For example, the content generator 215 may comprise one or more cameras. Thus, for example, the watermark embedding system 210 may be a vehicle "dashcam" system comprising one or more cameras that generate video content 220 as the vehicle is being operated, with the embedding module 214 watermarking the video content 220 as the video content 220 is captured, to generate watermarked content 230. As another example, the watermark embedding system 210 may be a computer or games console arranged to execute a computer video game, and the content generator 215 may be part of the computer video game that generates video game content.

Additionally or alternatively, the content source module 212 may receive the initial item of content 220 from a source (not shown in figure 2) that is external to the watermark embedding system 210 - thus, the content source module 212 may comprise an input 216 for receiving the initial item of content 220 from a source. For example, the watermark embedding system 210 may be a computer or games console arranged to execute an online/networked computer video game, and the input 216 may be part of the computer video game arranged to receive video game content generated by a remote/separate server.

In some embodiments, the watermark pattern module 217 may itself, be arranged to generate the watermark pattern 222 and may, therefore, comprise a watermark pattern generator 219 for generating the watermark pattern 222. As is well-known in this field of technology, there are many different techniques available for generating a watermark pattern 222, and they shall not, therefore, be described in more detail herein. As mentioned, the watermark pattern 222 represents certain payload information that is to be embedded (or hidden or encoded) in the initial item of content 220. Such payload data may be predetermined. For example, the watermark embedding system 210 may be a computer or games console arranged to execute a computer video game, and the payload data may be a unique identifier for a particular instance of that computer game (e.g. so as to be able to track unauthorized use of game instances): in some such cases, the unique identifier may be embedded or stored within the computer game software and the watermark pattern generator 219 may be part of the computer game software and arranged to generate the watermark pattern 222 based on the stored unique identifier; alternatively, the watermark pattern 222 may be pre-generated and embedded or stored within the computer game software and the watermark pattern generator 219 may be part of the computer game software and arranged to output/provide the stored watermark pattern 222. In other embodiments, the payload data may be dynamically generated (either by the watermark pattern generator 219 itself, by another part of the watermark embedding system 210, or by some entity external to the watermark embedding system 210). For example, the watermark embedding system 210 may be a computer or games console arranged to execute a computer video game, and the payload data may represent an identifier of a player, an identifier of the computer or games console being used, an IP address for the watermark embedding system 210, configurations/settings/memory contents of the watermark embedding system 210, etc. In such cases, the watermark pattern generator 219 may be part of the computer game software and may be arranged to generate or obtain the dynamic payload data so that the pattern watermark generator 219 can then generate the watermark pattern 222 based on that payload data.

Additionally or alternatively, the watermark pattern module 217 may be arranged to receive the watermark pattern 222 from a source (not shown in figure 2) that is external to the watermark embedding system 210 - thus, the watermark pattern module 217 may comprise an input 218 for receiving the watermark pattern 222 from a source. For example, the watermark embedding system 210 may be a computer or games console arranged to execute an online/networked computer video game, and the input 218 may be part of the computer video game arranged to receive one or more watermark patterns 222 generated by a remote/separate server (e.g. a server that may also be providing the initial item of content 220).

The watermark embedding system 210 may store the watermarked item of content 230 in a storage (or memory) 250. The storage 250 may be part of the watermark embedding system 210 or, as shown in figure 2, may be external to the watermark embedding system 210. Additionally or alternatively, the watermark embedding system 210 may communicate (or transmit or provide) the watermarked item of content 230 to a third party (not shown in figure 2), for example via one or more networks 252. The one or more networks 252 may, for example, comprise one or more of: the internet, wide area networks, local area networks, metropolitan area networks, wireless networks, broadcast networks, telephone networks, cable networks, satellite networks, etc. As shown in figure 2, in some embodiments, the watermark embedding system 210 may store the watermarked item of content 230 in the storage (or memory) 250, with the watermarked item of content 230 being subsequently communicated (or transmitted or provided) to a third party (not shown in figure 2), for example via the one or more networks 252. Additionally or alternatively, the watermark embedding system 210 may be arranged to display the watermarked item of content 230 on a display 120.

The watermark decoding system 260 comprises a watermark decoding module 262 and a results processing module 264, each of which may be implemented as software executing on, say, a processor 108 of a computer system 100 that is part of (or that forms) the watermark decoding system 260 or as a hardware module of the watermark decoding system 260 or as a combination of both software and hardware.

In operation, the watermark decoding module 262 receives (or obtains or inputs) an item of content 270 to be "tested" (or processed or analysed), referred to herein for simplicity as the test item of content 270. In practice, the test item of content 270 will normally be a version of the watermarked item of content 230. In particular, the test item of content 270 may be the watermarked item of content 230 obtained (directly or indirectly) from the watermark embedding system 210, e.g. obtained via the network 252 or from the storage 250, with this being potentially via one or more third parties to whom the watermarked item of content 230 was initially or subsequently provided. It is possible that the watermarked item of content 230 may undergo one or more amounts of processing 290 before being provided as an input to the watermark decoding system 260 and, therefore, the test item of content 270 may not be exactly the same as the watermarked item of content 230. Such processing 290 could include, for example: data compression; insertion of additional data; deletion of data; changes to data values; format or standards conversion; etc. For example, if the watermarked item of content 230 comprises a video sequence, then the processing 290 could include one or more of: deletion of video frames/fields; insertion of video frames/fields; changes to frame rate; reordering of frames; changes to pixel values of the frames; data compression; change from one video format to another; colour conversion; cropping; one or more geometric transformations such as rotation, stretching, sheer; capturing via a camera/camcorder from the display 120, etc. Some or all of the processing 290 may be part of a natural process flow for the watermarked item of content 230 (e.g. compression as part of data communication between different entities). Additionally or alternatively, some or all of the processing 290 may be malicious, in that an attacker may have processed or modified the watermarked item of content 230 with a view to achieving an unauthorized goal. It is, however, possible that the watermarked item of content 230 has not undergone any processing 290 before being provided as an input to the watermark decoding system 260 and, therefore, the test item of content 270 may be the same as the watermarked item of content 230.

The watermark decoding module 262 then uses a decoding algorithm (corresponding to the watermark encoding/embedding algorithm that was used to generate the watermark pattern 222 and to apply the watermark at the embedding module 214) to try to extract, or decode, embedded information from the test item of content 270. If the test item of content 270 provided to the watermark decoding module 262 was not originally a watermarked item of content, or if the processing 290 performed on the watermarked item of content 230 so as to arrive at the test item of content 270 has been sufficiently large/severe so as to make the embedded watermark undecodable, then the watermark decoding module 262 may output a result 280 that indicates that no watermark may be decoded from the test item of content. Alternatively, if the test item of content 270 provided to the watermark decoding module 262 is (or is based on) the watermarked item of content 230, and if the processing 290 (if any) performed on the watermarked item of content 230 so as to arrive at the test item of content 270 has not been sufficiently large/severe so as to make the embedded watermark undecodable, then the watermark decoding module 262 may output a result 280 that indicates, for example, one or more of: (i) a watermark has been detected; (ii) the decoded payload data; (iii) some or all of the decoded payload data (e.g. if only a part of the watermark could be decoded), (iv) etc.

The results processing module 264 may then process the result 280 output/received from the watermark decoding module 262. In some embodiments, the results processing module 264 comprises an output 265 for communicating some or all of the result 280 to a system (not shown in figure 2) external to the watermark decoding system 260. Additionally or alternatively, the results processing module 264 may comprise a module 266 for taking one or more actions at the watermark decoding system 260 responsive to the result (depending on the intended purpose of the watermark itself). For example, if the watermark payload identifies an instance of a computer game that is known to have been involved in unauthorized use/distribution, then the results processing module 264 may be configured to perform one or more actions such as: alerting the rights holder for the computer game; sending instructions to the games console executing the game (or another system, e.g. a games server, participating in a games session) so as to prevent that instance of the game from continued execution; etc.

Embodiments of the invention specifically relate to watermarking in the context of video game content, i.e. embedding information in video content, where the video content comprises a sequence of video images generated for a computer game. In this context, therefore, the watermark embedding system 210 is a computer game system 210 of an end-user (or player of the computer game). Such a computer game system 210 could be, for example, a personal computer or a dedicated computer games console (such as any of the PlayStation^{®}, Xbox^{®}, Nintendo^{®} consoles). The content source module 212, the embedding module 214, and the watermark pattern module 217 form part of the computer game software of the computer game executed at the computer game system 210. The computer game may be executed in isolation at the computer game system 210 (for example where the computer game is a standalone offline game); alternatively, at least some of the functionality of the computer game may be provided by one or more computer game servers (for example where the computer game is a distributed multiplayer game provided over a network, such as the internet).

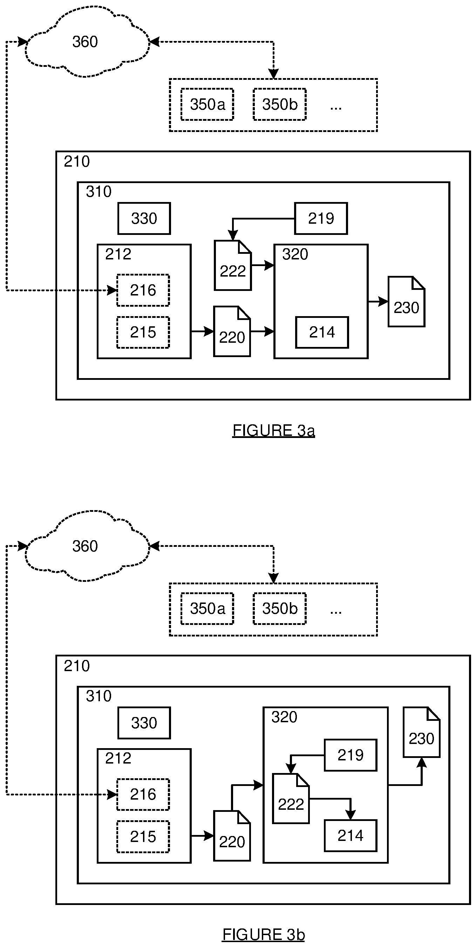

Figure 3a schematically illustrates the computer game system 210 of an end-user (or player) according to some embodiments of the invention. Figure 3a illustrates the system 210 in a similar manner as figure 2, with the reference numerals in common applying to the same features. As shown in figure 3a, the computer game system 210 executes a computer game 310, for example using one or more processors 108 (such as one or more central processing units and one or more graphics processing units). The computer game 310 is an item of software (or a computer program) that comprises the content source module 212, the embedding module 214, the watermark pattern generator 219, and computer game logic 330 (for provision of some or all of the computer game functionality). As illustrated in figure 3a, the embedding module 214 is implemented as (at least a part of) a shader 320, as shall be described in more detail shortly.

The computer game logic 330 controls provision of some or all of the computer game functionality. If the computer game 310 is a standalone/isolated computer game (e.g. an offline computer game), then the computer game logic 330 may provide all of the computer game functionality (i.e. receiving input from a player, generating and providing output to a player, game rules, etc.). Alternatively, if the computer game 310 is a distributed multiplayer game, then at least some of the computer game functionality may be provided via one or more computer games servers 350 (shown as servers 350a and 350b in figure 3a) via a network 360 (such as the internet).

In operation, the computer game 310, under control of the computer game logic 330, obtains video game content that comprises a sequence of video images generated for the computer game. As discussed above, in some embodiments the computer game 310 comprises the input 216 which is arranged to receive, via the network 360, video game content generated by one or more of the computer games servers 350. In some embodiments, the computer game 310 comprises the content generator 215 that itself generates the video content (without involvement of any of the computer games servers 350). In some embodiments, the computer game 310 comprises both the input 216 and the content generator 215, for example so that the content generator 215 may modify/update video content received at the input 216 from the one or more computer games servers 350. Since the generation of video content for a computer video game is well-known, such generation shall not be described in more detail herein.

For each of one or more video images 220 of the sequence of video images provided/obtained by the content source module 212, the shader 320 (that implements the embedding module 214) generates the watermarked image 230 for display to the end-user, where the generation of the watermarked image 230 comprises combining the video image 220 and the watermark pattern 222 (as generated by the watermark pattern generator 219). It will be appreciated that the shader 320 may be one of several shaders that form part of the computer game 310, e.g. the shader 320 may be one shader in a pipeline of several shaders. Thus, it will be appreciated that some processing may be performed on the video image 220 prior to the watermark embedding by the shader 320 to form the watermarked image 230, and that subsequent processing may be performed on the watermarked image 230 before a visual output is provided to the end-user (although the visual output will, of course, be based on the watermarked image 230). Such additional processing is not depicted in figure 3a.

Shaders are well-known - see, for example, the discussion of shaders at https://en.wikipedia.org/wiki/Shader, https://www.khronos.org/opengl/wiki/Shader, https://learnopengl.com/Getting-started/Shaders, the contents of which are incorporated herein by reference. In particular, a shader is a computer program (which forms part of the computer game 310) that performs certain graphics processing as part of the graphics rendering. Shaders usually execute on a graphics processing unit (GPU), which may be one of the processors 108 of the computer game system 210. This enables the shaders to efficiently implement graphical effects as part of the video rendering pipeline/processing. Therefore, implementing the embedding module 214 as a shader 320 (or as part of a shader 320) enables efficient watermark embedding. Moreover, as shaders are generally smaller programs/modules implemented in a pipeline of shaders, they are more easily updatable/swappable. Therefore, by implementing the embedding module 214 as a shader 320 (or as part of a shader 320), security breaches can be easily rectified later on (by the computer game system 210 downloading an updated shader for performing the watermark embedding) without having an impact on the content generation or the core game logic 330.

Given the intrinsic nature of shaders and how they may leverage the advantages of execution on a GPU, the shader 320 may efficiently combine the watermark pattern 222 with the video image 220. For example, combining the video image 220 and the watermark pattern 222 may comprise the shader 320 applying the watermark pattern 222 to the video image 220 as an overlay for the video image 220 and/or as a texture for some or all of the video image 220.

As is well-known in this field of technology, some techniques for generating the watermark pattern 222 may be based on one or more keys - for example, a key to initialize a random number generator used for generating the watermark pattern 222 (e.g. when a spread spectrum watermarking technique is used based on a vector of random variables). With that in mind, the shader 320 may be arranged to request and/or receive a key from a game server 350 involved in provision of at least a part of the computer game functionality, so that the shader 320 may then generate the watermark pattern 222 using the key.

Figure 3b schematically illustrates the computer game system 210 of an end-user (or player) according to some embodiments of the invention. Figure 3b is the same as figure 3a, except that the watermark pattern generator 219 is implemented as part of the shader 320. This may be beneficial when the watermark pattern generation is performed dynamically based on the contents of the video image 220 (since shaders and GPUs can be better optimized for image processing and analysis, e.g. edge and texture detection, which may be used to update/modify the watermark pattern 222).

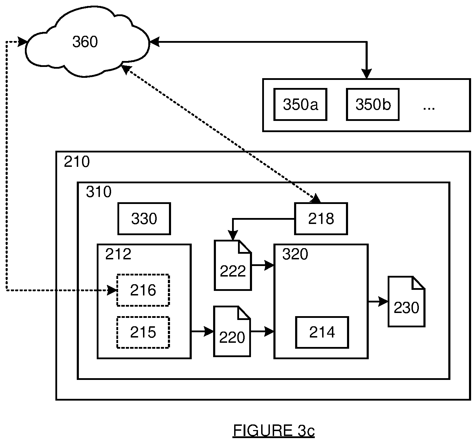

Figure 3c schematically illustrates the computer game system 210 of an end-user (or player) according to some embodiments of the invention. Figure 3c is the same as figure 3a, except that instead of using the watermark pattern generator 219, the computer program 310 comprises the input 218 for receiving the watermark pattern 222 from a source (e.g. via the network 360 from one or more of the computer games servers 350).

It will be appreciated that, in some embodiments of the invention, a watermark pattern 222 is applied to every video image 220 of the video content, so that all video images of the visual output provided to the end user are watermarked. In contrast, in other embodiments of the invention, a watermark pattern 222 is applied to only a subset of the video images 220 of the video content, so that some, but not all, video images of the visual output provided to the end user are watermarked.

Thus, in general, embodiments of the invention provide for a method for a computer game 310, executing at a computer game system 210 of an end-user, to embed information in video content, the video content comprising a sequence of video images 220 generated for the computer game 310, where the method comprises: for each of one or more video images 220 of the sequence of video images, generating a watermarked image 320 for display to the end-user, said generating comprising combining the video image 220 and a watermark pattern 222 representative of at least a part of the information using a shader 320 of the computer game 310.

It will be appreciated that the information represented by the watermark pattern 222 (and therefore embedded in the watermarked image 320) may be any information. However, in some embodiments, the information comprises one or more of: (a) an identifier of the particular instance of the computer game 310 executing at the computer game system 210 (e.g. a unique identifier of the computer game instance or a version number for the computer game instance); (b) an identifier of the computer game system 210 (e.g. a MAC address or and IP address); and (c) an identifier of the end-user (e.g. an identifier of an account or login name). Such information may be used, for example, to help identify unauthorized use or distribution of the computer game 210 and/or the visual output provided by the computer game 210 (e.g. unauthorized copying and distribution of video sequences captured as the end-user is playing the game).

The shader may be preconfigured with at least a part of the information to be embedded in the video content (e.g. an identifier for the computer game instance). Additionally or alternatively, the shader 320 may be configured to request and/or receive at least a part of the information to be embedded in the video content from a game server 350 involved in provision of at least a part of the computer game functionality.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method for a computer game, executing at a computer game system of an end-user, to embed information in video content, the video content comprising a sequence of video images generated for the computer game, the method comprising:
for each of one or more video images of the sequence of video images, generating a watermarked image for display to the end-user, said generating comprising combining the video image and a watermark pattern representative of at least a part of the information using a shader of the computer game.

2. The method of claim 1, comprising the shader generating the watermark pattern.

3. The method of claim 2, comprising the shader receiving a key from a game server involved in provision of at least a part of the computer game functionality, wherein the shader generates the watermark pattern using the key.

4. The method of claim 1, comprising the computer game obtaining the watermark pattern from a game server involved in provision of at least a part of the computer game functionality.

5. The method of any one of the preceding claims, wherein the information comprises one or more of: (a) an identifier of the particular instance of the computer game executing at the computer game system; (b) an identifier of the computer game system; and (c) an identifier of the end-user.

6. The method of any one of the preceding claims, wherein the shader is preconfigured with at least a part of the information to be embedded in the video content.

7. The method of any one of the preceding claims, comprising the shader receiving at least a part of the information to be embedded in the video content from a game server involved in provision of at least a part of the computer game functionality.

8. The method of any one of the preceding claims, wherein combining the video image and the watermark pattern comprises the shader applying the watermark pattern to the video image as an overlay for the video image and/or as a texture for the video image.

9. A computer program which, when executed by one or more processors of a computer game system, causes the one or more processors to carry out a method according to any one of the preceding claims.

10. A computer-readable medium storing a computer program according to claim 9.
